# EUROPEAN PATENT SPECIFICATION

(11) **EP 2 052 230 B1**
(45) Date of publication and mention of the grant of the patent: **21.09.2011**
(21) Application number: 07728302.6
(22) Date of filing: 19.04.2007
(51) Int. Cl.: G01N 1/22

(54) **SAMPLING DEVICE FOR VOLATILE SUBSTANCES**
PROBENAHMEVORRICHTUNG FÜR FLÜCHTIGE STOFFE
DISPOSITIF D'ÉCHANTILLONNAGE DE SUBSTANCES VOLATILES

(30) Priority: 01.08.2006 IT MI20061528
(43) Date of publication of application: 29.04.2009
(73) Proprietor: Fondazione Salvatore Maugeri - Clinica del Lavoro e della Riabilitazione, 27100 Pavia (IT)
(72) Inventor: COTTICA, Danilo, 26100 Cremona (IT)
(74) Representative: Cinquantini, Bruno
(86) International application number: PCT/EP2007/053842
(87) International publication number: WO 2008/015030

(56) References cited:
- EP-A2- 0 714 020
- DE-C1- 3 908 046
- US-A- 4 973 434
- US-A1- 2003 215 958

## Description

### Field of the invention

The present invention relates to a sampling device for volatile substances dispersed in air by radial symmetry diffusion, specifically used for monitoring the pollution in working and living environments.

### State of the art

Sampling of volatile substances may be currently carried out with low investment and management costs, and entirely without energy consumption, by resorting to diffusion sampling devices or samplers instead of the conventional systems based on the use of suction pumps powered by battery or by the electrical mains. Diffusion samplers comprise axial symmetry devices and radial symmetry devices. The latter are most advantageous due to their high sampling flow rate. An example of a radial symmetry device is described in EP0714020.

Such diffusion samplers, however, display some disadvantages.

A first disadvantage is represented by the fact that in cases in which use of a liquid absorbing means is provided, as in numerous pollutant sampling methods, the absorbing cartridge containing the liquid does not allow to exploit the diffusion over its entire surface. It is the case, for example, of axial symmetry samplers which contain absorbing liquid deposited on the bottom of a glass tube.

A second disadvantage of the known sampling devices further resides in the fact that simple grids or membranes of low thickness do not maintain the diffusion gradient stable, due to the turbulence of the air in correspondence of the diffusion surface.

The need to make a radial symmetry diffusion sampling device capable of overcoming the aforesaid drawbacks is therefore felt.

### Summary of the invention

It is the main object of the present invention to make a sampling device for volatile polluting substances by radial symmetry diffusion which, in addition to allowing high sampling flow rates, allows to exploit the radial symmetry diffusion on the entire surface of a porous cylindrical cartridge provided with a liquid absorbing means immobilised therein.

A further object of the present invention is to make a device capable of considerably reducing the effect of the air speed on the diffusion sampling flow rate with respect to that of the known devices provided with low thickness grids or membranes.

The present invention thus proposes to obtain the aforementioned objects by making a sampling device for volatile polluting substances by radial symmetry diffusion which has the features of claim 1.

Advantageously, the possibility of immobilising a liquid absorbing means in a porous cartridge, arranged inside the sampler, by means of a deposition process within the pores of the absorbing cartridge, allows to exploit radial symmetry diffusion over its entire surface.

The diffusion sampler, object of the present invention, further has the following advantages:
- the diffusion in radial direction over the entire cylindrical surface of the sampler determines, despite its small size, a high value of the ratio between the diffusion surface and the diffusion path length (S/L) and thus a sampling flow rate comparable to that obtainable in sampling by means of suction pumps;
- the thickness of the porous wall considerably reduces the effect of the speed of air on the diffusion sampling flow rate;
- the possibility of immobilising different absorbing means in the pores of the absorbing cartridge allows to make the sampler adapted to determine various categories of volatile substances.

The sampling is performed in two steps: the volatile substance molecules are diffused from the air of the external contaminated environment into the internal space of the sampling device, being firstly diffused through a tubular porous membrane and subsequently being collected by a porous material absorbing cartridge impregnated with an absorbing liquid.

The dependent claims describe preferred embodiments of the invention.

### Brief description of the Figures

Further features and advantages of the invention will be better apparent in view of the detailed description of a preferred, but not exclusive, embodiment, of a sampling device for volatile substances illustrated by way of non-limitative example, with the aid of the accompanying drawings, in which:
Fig. 1 represents a longitudinal section of part of the device according to the invention and side views of its ends;
Fig. 2 represents a side view of a component of the device of the invention;
Fig. 3 represents a side view of a further component of the device of the invention;
Fig. 4 represents a longitudinal section of a complete device fixed to the component of Fig. 3.

### Detailed description of a preferred embodiment of the invention

With reference to the Figures, it is represented a sampling device 1, or simply sampler, for volatile substances by radial symmetry diffusion comprising:
- a tubular diffusion body 2, preferably of cylindrical shape, reusable for repeated samplings;
- an absorbing cartridge 3, also preferably of cylindrical shape;
- a supporting plate 4.

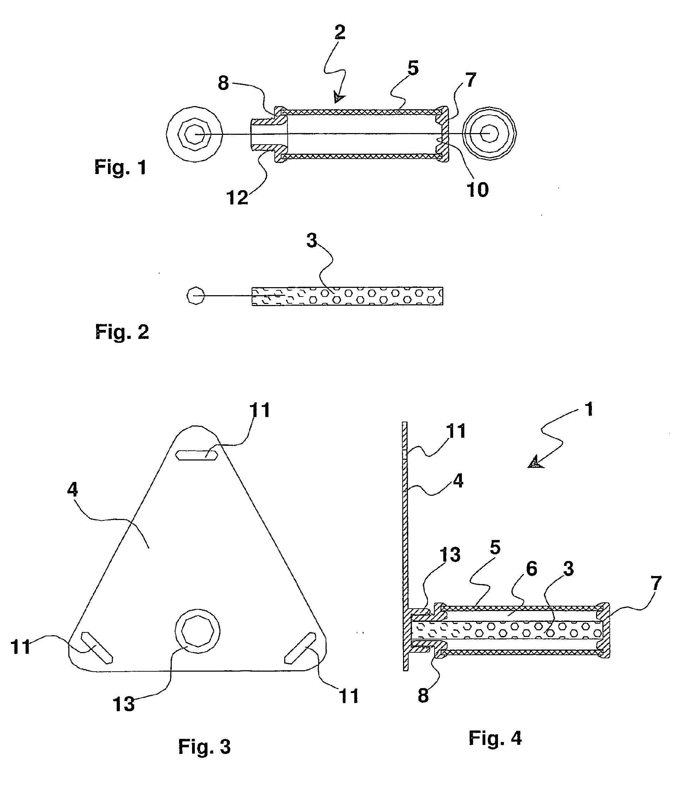

Tubular diffusion body 2, shown in Fig. 1, of the volatile substances to be analysed, coming from the external environment, comprises a porous material membrane 5 formed by a tube of porous polymer, preferably polyethylene, closed at the ends by a closed base or bottom 7
and by a through head 8, also these made of polyethylene and fixed, e.g. welded, to the tube.

Absorbing cartridge 3, positionable preferably in concentric and coaxial manner inside tubular body 2, contains an absorbing material adapted to absorb the volatile substances which are diffused through membrane 5.

In the preferred embodiment of the invention, absorbing cartridge 3 is a porous polymer cylinder, hollow or full, as that shown in Fig. 2, which contains the liquid absorbing means within the pores of the polymeric structure, preferably in polyethylene, subsequent to the deposition of a suitable liquid mixture. Advantageously, indeed, a preventive deposition process of said liquid mixture within the pores or interstices of porous polymer cartridge 3 allows to exploit to the maximum the collection surface of volatile substances, radially diffused through membrane 5 in space 6 delimited by membrane 5 itself and by cartridge 3.

Cartridge 3 is inserted in tubular diffusion body 2 and maintained in position between a notch or lead-in 10 arranged on the closed base or bottom 7 and the opening of through head 8. The longitudinal extension of cartridge 3 is essentially equal to the extension of tubular diffusion body 2 plus that of through head 8.

Advantageously, the thickness of the porous wall of membrane 5 is such to considerably reduce the effect of air speed on the sampling flow rate by diffusion, thus allowing a better collection of the volatile substances to be analysed. Indeed, by reducing the turbulence in the air in correspondence of the diffusion surface, the diffusion limit layer is made stable thanks to an essentially constant, or however lightly variable, concentration gradient between the outside and the inside of the sampling device.

Preferably, the thickness of the porous wall of membrane 5 is comprised in the range of 1-6 mm.

In the case of a hollow porous cylinder, absorbing cartridge 3 has a thickness from 0,2 to 1 mm.

The dimensions of the pores are advantageously equal to approximately 10-50 µm for membrane 5 and equal to approximately 10-50 µm for cartridge 3.

The assembly of the sampler of the invention is completed by fixing head 8 of tubular diffusion body 2, containing absorbing cartridge 3, to supporting plate 4, preferably made of polycarbonate or polyethylene, in the manner shown for example in Fig. 4. In this case, the through head 8 is provided with an external threading 12 for fixing the sampler to the corresponding threaded seat 13 provided on supporting plate 4. In an alternative embodiment, fixing between sampler of the invention and plate may simply be of fitting-in type with plate 4 acting as cap. Supporting plate 4 is preferably, but not necessarily, triangular in the shape, as shown in Fig. 3. Such plate 4, provided with one or more housings for clips 11, preferably three in number, allows to apply the sampler to people's clothes or to fix it to a suitable support provided in the various environments.

The absorbing material is retrieved after sampling in order to analyse the substances to be determined by means of suitable chemical reactants.

The "equivalent pumping" capacity of the sampler of the invention is approximately 80-100 cm³/min of air, its total weight is equal to approximately 15-20 g, and its analytic sensitivity limit is in the order of 0,1 µg/m³ for a seven-day exposure.

The sampler, except for the supporting plate, is made of high-thickness polyethylene so as to confer great strength and chemical inertia.

## Claims

1. A sampling device for volatile polluting substances by radial symmetry diffusion, comprising:
- a first tubular diffusion body (2) for the diffusion of said volatile substances from an external environment to within said first body,
- a second body (3), placed within the first body (2), containing an absorbing means adapted to absorb said volatile substances,
**characterised in that** said second body (3) is a cylinder formed by porous polymer, said cylinder having pores containing said absorbing means in a liquid phase, immobilised in said pores in order to collect said volatile substances radially diffused through the first body (2) in a space (6) delimited by said first body (2) and said second body (3).

2. A device according to claim 1, wherein the second body (3) is a full cylinder.

3. A device according to claim 1, wherein the second body (3) is a hollow cylinder.

4. A device according to claim 2 or 3, wherein said porous polymer is preferably polyethylene.

5. A device according to any of the preceding claims, wherein the first tubular body (2) is a porous membrane (5) arranged coaxially and externally to the second body (3).

6. A device according to claim 5, wherein said membrane (5) is formed by a polymer, preferably polyethylene.

7. A device according to claim 5 or 6, wherein the thickness of the membrane (5) is in the 1-6 mm range.

8. A device according to any of the preceding claims, wherein the dimensions of the pores is equal to approximately 10-20 µm for the first tubular body (2) and equal to approximately 10-50 µm for the second tubular body (3).

9. A device according claim 5, wherein the membrane (5) is closed at the ends by a blank bottom (7) and by a through head (8).

10. A device according to any of the preceding claims, wherein the second body (3) is adapted to be inserted in the first tubular body (2) and maintained in position between a lead-in (10) contemplated in the blank bottom (7) and the gap of the through head (8).

11. A device according to any of the preceding claims, wherein a supporting plate (4) adapted for the fastening of the device is contemplated and one or more housings for clips (11) are provided so as to apply the sampler to people's clothes or to a suitable support provided in the various environments.

## Patentansprüche

1. Abtastvorrichtung für flüchtige verunreinigende Substanzen durch Radialsymmetriediffusion, umfassend:
- einen ersten rohrförmigen Diffusionskörper (2) für die Diffusion der flüchtigen Substanzen von einer Außenumgebung in den ersten Körper,
- einen zweiten Körper (3), der in dem ersten Körper (2) angeordnet ist und ein absorbierendes Mittel enthält, das zur Absorption der flüchtigen Substanzen angepasst ist,
**dadurch gekennzeichnet, dass**
der zweite Körper (3) ein durch ein poröses Polymer gebildeter Zylinder ist, wobei der Zylinder Poren aufweist, die das absorbierende Mittel in einer flüssigen Phase immobilisiert in den Poren enthalten, um die flüchtigen Substanzen, die radial durch den ersten Körper (2) diffundiert sind, in einem durch den ersten Körper (2) und den zweiten Körper (3) begrenzten Raum (6) zu sammeln.

2. Vorrichtung nach Anspruch 1,
wobei der zweite Körper (3) ein Vollzylinder ist.

3. Vorrichtung nach Anspruch 1,
wobei der zweite Körper (3) ein Hohlzylinder ist.

4. Vorrichtung nach einem der Ansprüche 2 oder 3,
wobei das poröse Polymer bevorzugt Polyethylen ist.

5. Vorrichtung nach einem der vorhergehenden Ansprüche,
wobei der erste rohrförmige Körper (2) eine poröse Membran (5) ist, die koaxial und außerhalb des zweiten Körpers (3) angeordnet ist.

6. Vorrichtung nach Anspruch 5,
wobei die Membran (5) durch ein Polymer, bevorzugt Polyethylen, geformt ist.

7. Vorrichtung nach einem der Ansprüche 5 oder 6, wobei die Dicke der Membran (5) in einem Bereich von 1 bis 6 mm liegt.

8. Vorrichtung nach einem der vorhergehenden Ansprüche,
wobei die Abmessungen der Poren gleich etwa 10 bis 20 µm für den ersten rohrförmigen Körper (2) und gleich etwa 10 bis 50 µm für den zweiten rohrförmigen Körper (3) sind.

9. Vorrichtung nach Anspruch 5,
wobei die Membran (5) an den Enden durch einen Blindboden (7) und durch einen Durchgangskopf (8) geschlossen ist.

10. Vorrichtung nach einem der vorhergehenden Ansprüche,
wobei der zweite Körper (3) zum Einsetzen in den ersten rohrförmigen Körper (2) angepasst ist und in Position zwischen einer Zuführung (10), die in dem Blindboden (7) vorstellbar ist, und dem Spalt des Durchgangskopfes (8) gehalten wird.

11. Vorrichtung nach einem der vorhergehenden Ansprüche,
wobei eine Trägerplatte (4), die zur Befestigung der Vorrichtung angepasst ist, vorstellbar ist, und ein oder mehrere Gehäuse für Klemmen (11) vorgesehen sind, um die Abtasteinrichtung auf Kleidung von Leuten oder einem geeigneten Träger, der in verschiedenen Umgebungen vorgesehen ist, anzuwenden.

## Revendications

1. Dispositif d'échantillonnage de substances polluantes volatiles par une diffusion à symétrie radiale, comprenant:
- un premier corps de diffusion tubulaire (2) pour la diffusion desdites substances volatiles d'un environnement externe dans ledit premier corps,
- un deuxième corps (3), placé dans le premier corps (2), contenant un moyen d'absorption apte à absorber lesdites substances volatiles,
**caractérisé en ce que** ledit deuxième corps (3) est un cylindre formé par un polymère poreux, ledit cylindre ayant des pores contenant ledit moyen d'absorption en une phase liquide, immobilisé dans lesdits pores pour recueillir lesdites substances volatiles diffusées radialement à travers le premier corps (2) dans un espace (6) délimité par ledit premier corps (2) et ledit deuxième corps (3).

2. Dispositif selon la revendication 1, où le deuxième corps (3) est un cylindre plein.

3. Dispositif selon la revendication 1, où le deuxième corps (3) est un cylindre creux.

4. Dispositif selon la revendication 2 ou 3, où ledit polymère poreux est de préférence le polyéthylène.

5. Dispositif selon l'une quelconque des revendications précédentes, où le premier corps tubulaire (2) est une membrane poreuse (5) agencée coaxialement et extérieurement au deuxième corps (3).

6. Dispositif selon la revendication 5, où ladite membrane (5) est formée par un polymère, de préférence par du polyéthylène.

7. Dispositif selon la revendication 5 ou 6, où l'épaisseur de la membrane (5) est dans la plage de 1-6 mm.

8. Dispositif selon l'une quelconque des revendications précédentes, où les dimensions des pores sont égales à approximativement 10-20 µm pour le premier corps tubulaire (2) et égales à approximativement 10-50 µm pour le deuxième corps tubulaire (3).

9. Dispositif selon la revendication 5, où la membrane (5) est fermée aux extrémités par un fond d'obturation (7) et par une tête traversante (8).

10. Dispositif selon l'une quelconque des revendications précédentes, où le deuxième corps (3) est apte à être inséré dans le premier corps tubulaire (2) et à être maintenu en position entre une entrée (10) envisagée dans le fond de fermeture (7) et l'espace de la tête traversante (8).

11. Dispositif selon l'une quelconque des revendications précédentes, où une plaque de support (4) conçue pour la fixation du dispositif est envisagée, et un ou plusieurs boîtiers pour des clips (11) sont réalisés de manière à appliquer le modèle à des vêtements de gens ou à un support approprié réalisé dans les divers environnements.
